# EUROPÄISCHE PATENTSCHRIFT

(11) **EP 4 560 370 B1**
(45) Veröffentlichungstag und Bekanntmachung des Hinweises auf die Patenterteilung: **14.01.2026**
(21) Anmeldenummer: 23211176.5
(22) Anmeldetag: 21.11.2023
(51) Int. Cl.: G02B 6/44

(54) **SPLEISSSCHUTZAUFNAHME**
SPLICE PROTECTION RECEPTACLE
RÉCEPTACLE DE PROTECTION D'ÉPISSURE

(43) Veröffentlichungstag der Anmeldung: 28.05.2025
(73) Patentinhaber: Hauff-Technik GRIDCOM GmbH, 73494 Rosenberg (DE)
(72) Erfinder: GSCHWINDER, Roland, 73431 Aalen (DE)
(74) Vertreter: Szynka Smorodin Patentanwälte Partnerschaft mbB

(56) Entgegenhaltungen:
- EP-B1- 2 290 418
- US-A1- 2023 324 624
- US-B1- 6 226 439
- US-B1- 6 249 636
- US-B2- 10 746 929

## Beschreibung

Die vorliegende Erfindung betrifft eine Vorrichtung zur Aufnahme zumindest eines Spleißschutzes, eine Spleißkassette, ein Spleißmodul und einen Spleißmodulstapel damit sowie die entsprechende Verwendung.

Spleißschutzaufnahmevorrichtungen dienen einer mechanischen Aufnahme zumindest eines Spleißschutzes, wie bspw. eines Schrumpfspleißschutzes oder eines Crimpspleißschutzes, für eine Verbindung von Lichtwellenleitern. Bspw. kann, bedingt durch einen thermischen Schrumpfvorgang bei einer Herstellung einer Schrumpfspleißverbindung, ein aufzunehmender Schrumpfspleißschutz Abweichungen im Außendurchmesser aufweisen. Auch andere Spleißverbindungen wie Crimpspleißverbindungen können, z. B. bedingt durch ein jeweiliges Herstellungsverfahren, Abweichungen in einer Außengeometrie aufweisen. Diese Abweichungen im Außendurchmesser bzw. der Außengeometrie erschweren eine sichere und zuverlässige Fixierung in einer Aufnahmevorrichtung.

Die US 2023/0324624 A1 zeigt ein Beispiel einer Vorrichtung zur Aufnahme eines Spleißschutzes.

Der vorliegenden Erfindung liegt die technische Aufgabe zugrunde, eine vorteilhafte Spleißschutzaufnahmevorrichtung anzugeben.

Erfindungsgemäß löst diese Aufgabe eine Spleißschutzaufnahmevorrichtung nach Anspruch 1. Die Spleißschutzaufnahmevorrichtung umfasst ein Tragelement, ein erstes Halteelement und ein zweites Halteelement. Wie nachstehend im Einzelnen erläutert, sind das erste Halteelement und das zweite Halteelement in besonderer Weise auf einer Tragelementoberfläche des Tragelements angeordnet und ausgestaltet. Durch diese besondere Anordnung der Halteelemente und ihre Ausgestaltung wird eine sichere und zuverlässige Fixierung des zumindest einen Spleißschutzes gewährleistet. Es können bspw. auch Spleißschutze mit sich über eine Längsrichtung des Spleißschutzes ändernden Durchmessern oder Exemplarstreuungen oder anderen Toleranzen sicher und zuverlässig fixiert werden Bevorzugte Ausgestaltungen finden sich in den abhängigen Ansprüchen und der gesamten Offenbarung, wobei bei der Darstellung der Merkmale nicht immer im Einzelnen zwischen Vorrichtungs- und Verfahrens- bzw. Verwendungsaspekten unterschieden wird; implizit ist die Offenbarung hinsichtlich sämtlicher Anspruchskategorien zu lesen. Werden bspw. die Vorteile der Spleißschutzaufnahmevorrichtung für einen Zweck oder in einer bestimmten Anwendung beschrieben, ist dies zugleich als Offenbarung einer entsprechenden Verwendung zu sehen.

Das in Anspruch 1 genannte Tragelement weist die Tragelementoberfläche auf. Orthogonal zu der Tragelementoberfläche ist eine Tragelementhochachse definiert.

Das erste Halteelement weist zwei Segmente auf, welche in Richtung der Tragelementhochachse von der Tragelementoberfläche beabstandet sind. Die zwei Segmente sind in einer Krümmungsebene, welche parallel zur Tragelementoberfläche definiert ist, gekrümmt. Die Segmente können auch in weiteren Richtungen gekrümmt sein, solange eine wesentliche Krümmung der Segmente in der Krümmungsebene liegt. Bevorzugt weisen die zwei Segmente in der Krümmungsebene ihre größte Krümmung auf.

Das erste Halteelement weist ferner zumindest zwei erste Stege auf, mittels welcher dieses mit der Tragelementoberfläche verbunden ist. Die ersten Stege sind, entlang einer ersten Ausdehnungsrichtung betrachtet, welche in einer Richtung einer größten räumlichen Ausdehnung des ersten Halteelements definiert ist, an gegenüberliegenden Enden der zwei Segmente angeordnet. Bevorzugt können die zwei ersten Stege demnach an einander gegenüberliegenden Enden des ersten Halteelements angeordnet sein. Alternativ kann eines der oder können die gegenüberliegenden Enden der zwei Segmente nicht die Enden des ersten Halteelements sein. In diesem Fall sind der oder die Stege an den Enden der zwei Segmente angeordnet und das oder die Enden des ersten Halteelements ragen über diese Stege hinaus. Die Krümmung der Segmente besteht im Übrigen über mindesten den größten Teil ihrer Erstreckung in der ersten Ausdehnungsrichtung, vorzugsweise die ganze.

In jedem Fall sind die zwei ersten Stege jedoch dergestalt, dass diese die Segmente mit der Tragelementoberfläche verbinden. Dabei können das Tragelement und das erste Halteelement integral und vorzugsweise aus demselben Material geformt sein. Hierdurch wird es möglich, das Tragelement und das erste Halteelement in wenigen oder einem einzigen Arbeitsschritt zu formen.

Die Vorrichtung umfasst ferner ein zweites Halteelement. Das zweite Halteelement weist eine zweite Ausdehnungsrichtung auf, welche in Richtung einer größten räumlichen Ausdehnung des zweiten Halteelements definiert ist. Diese zweite Ausdehnungsrichtung weicht um weniger als 20° von der ersten Ausdehnungsrichtung ab. Das zweite Halteelement erstreckt sich also im Wesentlichen parallel oder zumindest in ähnlicher Richtung wie das erste Halteelement.

Die Anordnung des zweiten Halteelements relativ zum ersten Halteelement sowie die Ausgestaltung des ersten Halteelements mit zumindest zwei Segmenten ermöglichen es, den Spleißschutz sicher und zuverlässig zwischen dem ersten Halteelement und dem zweiten Halteelement zu fixieren. Insbesondere ermöglicht es die Ausgestaltung des ersten Halteelements mit zwei gekrümmten Segmenten auch Spleißschutze mit uneinheitlichem Außendurchmesser sicher und zuverlässig zu fixieren bzw. in der Spleißschutzaufnahmevorrichtung zu halten.

In diesem technischen Gebiet sind Kunststoffteile, insbesondere Spritzgussteile aus thermoplastischen Kunstoffen, üblich und auch im vorliegenden Fall bevorzugt. Solche Bauteile weisen eine relativ ausgeprägte materialbedingte Eigenelastizität auf, welche es in Verbindung mit der Ausgestaltung des ersten Halteelements mit zwei gekrümmten Segmenten ermöglicht, den Spleißschutz sicher zu fixieren. Eine Eigenelastizität des verwendeten Materials ist auch unabhängig davon bevorzugt. Insbesondere können die Stege und/oder Segmente bei der erfindungsgemäßen Fixierung eines Spleißschutzes elastisch reagieren und damit die Fixierung erleichtern oder ermöglichen. Aber auch bei anderen Materialien, etwa Metallen, gibt es eine gewisse Eigenelastizität, die in Verbindung mit der federartigen Form der Segmente die Funktion als Halteelement unterstützt.

Die Fixierung des Spleißschutzes kann dabei kraftschlüssig oder/und formschlüssig erfolgen. Bei einer kraftschlüssigen Fixierung wird der Spleißschutz bspw. zwischen den Segmenten des ersten Haltelements, dem zweiten Halteelement und der Tragelementoberfläche geklemmt. Alternativ kann der Spleißschutz bspw. auch zwischen den Segmenten des ersten Halteelements und den Stegen des zweiten Haltelements geklemmt werden. Bei einer formschlüssigen Fixierung kann der Spleißschutz zumindest teilweise unterhalb der Segmente des ersten Halteelements auf der Tragelementoberfläche liegen und durch die Segmente des ersten Halteelements und das zweite Haltelement und eventuell die jeweiligen Stege gegen Herausfallen bzw. unbeabsichtigtes Lösen gesichert sein. Natürlich können beide, die kraft- und die formschlüssige Fixierung, kombiniert sein.

Die schon angesprochene Elastizität hilft in beiden Fällen und kann insbesondere eine Verformung zur Anpassung an den zu fixierenden Spleißschutz und/oder ein Einrasten (also eine Herstellung eines Formschlusses) ermöglichen oder erleichtern.

Erfindungsgemäß weist auch das zweite Halteelement zwei Segmente und zumindest zwei zweite Stege im obigen Sinn auf. Die zwei Segmente des zweiten Halteelements sind in Richtung der Tragelementhochachse von der Tragelementoberfläche beabstandet. Die zwei zweiten Stege sind mit der Tragelementoberfläche verbunden. Beispielsweise können das Tragelement und das zweite Halteelement integral und vorzugsweise aus demselben Material geformt sein. Hierdurch wird es möglich, das Tragelement und das zweite Halteelement in wenigen oder einem einzigen Arbeitsschritt zu formen.

Bei einer weiteren bevorzugten Ausgestaltung sind auch die zwei Segmente des zweiten Halteelements im obigen Sinn in der Krümmungsebene gekrümmt.

Bei einer bevorzugten Ausgestaltung sind auch die zweiten Stege an gegenüberliegenden Enden der zwei Segmente des zweiten Halteelements angeordnet, und zwar entlang der zweiten Ausdehnungsrichtung betrachtet. Alternativ kann eines der oder können die gegenüberliegenden Enden der zwei Segmente nicht die Enden des zweiten Halteelements sein. In diesem Fall sind der oder die Stege an den Enden der zwei Segmente angeordnet und das oder die Enden des zweiten Halteelements ragen über diese Stege hinaus. Die Krümmung der Segmente besteht im Übrigen über mindesten den größten Teil ihrer Erstreckung in der ersten Ausdehnungsrichtung, vorzugsweise die ganze.

In jedem Fall sind die zwei zweiten Stege jedoch dergestalt, dass diese die Segmente mit der Tragelementoberfläche verbinden. Dabei können das Tragelement und das zweite Halteelement integral und vorzugsweise aus demselben Material geformt sein. Hierdurch wird es möglich, das Tragelement und das zweite Halteelement in wenigen oder einem einzigen Arbeitsschritt zu formen. Auch hier sind, wie oben, elastische Materialien und Kunststoffe bevorzugt.

Bei einer Ausgestaltung ist ein erstes der Segmente des ersten Halteelements gegensinnig zu einem zweiten der Segmente des ersten Halteelements gekrümmt. Ferner ist ein erstes der Segmente des zweiten Halteelements gegensinnig zu einem zweiten der Segmente des zweiten Halteelements gekrümmt. Vereinfacht gesagt sind die zwei Segmente des ersten Halteelements gegenläufig zueinander gekrümmt und die zwei Segmente des zweiten Halteelements ebenfalls gegenläufig zueinander gekrümmt. Die gegenläufige Krümmung der Segmente des ersten Halteelements und des zweiten Halteelements ermöglichen es, in einer Querrichtung, welche parallel zu der Tragelementoberflächen und orthogonal zu der ersten Ausdehnungsrichtung und/oder der zweiten Ausdehnungsrichtung definiert ist, mehrere erste und zweite Halteelemente derart anzuordnen, dass zwischen jedem der Paare aus erstem Halteelement und zweitem Halteelement ein Spleißschutz fixiert werden kann. Vereinfacht gesagt ermöglicht dies, dass jedes erste Halteelement und zweite Haltelement zur Fixierung zumindest eines Spleißschutzes verwendet werden kann.

Bei einer bevorzugten Ausgestaltung (die nicht zwingend mit der zuvor kombiniert werden muss) ist das erste Segment des ersten Halteelements, welches nächstbenachbart zu dem ersten Segment des zweiten Halteelements angeordnet ist, gleichsinnig zu diesem gekrümmt. Hierbei wird der Spleißschutz bspw. von dem ersten Segment des ersten Halteelements gegen einen nächstbenachbarten Steg des zweiten Halteelements und von einem zweiten Segment des zweiten Halteelements gegen einen nächstbenachbarten Steg des ersten Halteelements gedrückt. Jeder Spleißschutz wird also entlang der ersten und oder zweiten Ausdehnungsrichtung gesehen an mindestens zwei Stellen von dem ersten Halteelement und dem zweiten Haltelement oder den zugehörigen Stegen fixiert.

Bei einer anderen bevorzugten Ausgestaltung ist das erste Segment des ersten Halteelements, welches nächstbenachbart zu dem ersten Segment des zweiten Halteelements angeordnet ist, gegensinnig zu diesem gekrümmt. Bei Kombination mit der gegensinnigen Krümmung der benachbarten Segmente desselben Halteelements ergeben sich ähnliche Möglichkeiten wie bei der vorherigen Ausgestaltung.

Bei einer bevorzugten Ausgestaltung weist das erste Halteelement drei erste Stege auf. Einer der ersten Stege ist hierbei zwischen dem ersten Segment und dem zweiten Segment des ersten Halteelements angeordnet, und die übrigen beiden Stege sind an den jeweils verbleibenden Enden der Segmente angeordnet. Also sind entlang der ersten Ausdehnungsrichtung des ersten Halteelements drei erste Stege angeordnet, einer zwischen beiden Segmenten und die übrigen beiden an den Enden der zwei Segmente. Der zusätzliche Steg verbessert die Haltefunktion der Segmente und stabilisiert das Halteelement.

Bei einer bevorzugten Ausgestaltung gilt das auch oder unabhängig davon für das zweite Halteelement.

Bei einer bevorzugten Ausgestaltung weist das Tragelement in der Tragelementoberfläche zwischen zumindest einem Teil der Stege der Halteelemente im Bereich der Segmente Aussparungen auf. Genauer gesagt ist die Tragelementoberfläche im Bereich (entlang der Tragelementhochachse gesehen) unterhalb der Segmente und zwischen den mit den Halteelementen und der Tragelementoberflächen verbundenen Stegen unterbrochen. Die Segmente sind demnach über Bereichen des Tragelements angeordnet, in denen die Tragelementoberfläche eine Aussparung aufweist. Dies erleichtert es, die Spleißschutzaufnahmevorrichtung inklusive der Stege und der Halteelemente bspw. im Spritzgussverfahren herzustellen. Zudem kann hierdurch eine Flexibilität der Haltelemente erhöht und ein Herausdrücken der montierten Spleißschutze bspw. mit Hilfe eines Werkzeuges erleichtert werden.

Bei einer bevorzugten Ausgestaltung ist die Spleißschutzaufnahmevorrichtung einstückig aus einem ABS-Kunststoff, bevorzugt als Spritzgussteil, hergestellt. Hierdurch ist es möglich, die Spleißschutzaufnahmevorrichtung mit ausreichenden Toleranzen kostengünstig und in großen Stückzahlen herzustellen. Zudem ist es hierdurch möglich, mechanisch und thermisch ausreichend belastbare Spleißschutzaufnahmevorrichtungen herzustellen. Ferner sind diese Spleißschutzaufnahmevorrichtungen kostengünstig und weisen eine vorteilhafte Eigenelastizität auf.

Ferner kann die Spleißschutzaufnahmevorrichtung besonders bevorzugt auch mittels Zweikomponenten-Spritzguss (sog. "2K-Spritzguss") hergestellt werden, wobei beispielsweise die Haltelemente vollständig oder teilweise aus einem gegenüber dem Tragelement weicheren Material hergestellt werden und hierdurch deren Eigenelastizität weiter vorteilhaft erhöht wird.

Die Erfindung betrifft auch eine Spleißkassette zur Aufnahme zumindest eines Spleißschutzes. Die Spleißkassette umfasst zumindest eine Überlängenablage und einen Spleißbereich mit einer erfindungsgemäßen Spleißschutzaufnahmevorrichtung. In der Spleißkassette kann natürlich eine Vielzahl von Spleißschutzaufnahmevorrichtungen vorgesehen sein und es können mit den Spleißstellen verbundene Überlängen der Lichtwellenleiter in der direkt in der Spleißkassette vorgesehenen Überlängenablage verwahrt werden.

Ferner betrifft die Erfindung auch ein Spleißmodul mit einer erfindungsgemäßen Spleißkassette. Das Spleißmodul umfasst zumindest eine Patchstelle und eine Mehrzahl von Spleißkassetten.

Ferner betrifft die Erfindung auch einen Spleißmodulstapel mit einer Mehrzahl von erfindungsgemäßen Spleißmodulen.

Die Erfindung betrifft auch eine Verwendung der erfindungsgemäßen Spleißschutzaufnahmevorrichtung in einer Spleißkassette, vorzugsweise außerdem in Form einer Verwendung der Spleißkassette in einem Spleißmodul. Bspw. kann also die erfindungsgemäßen Spleißschutzaufnahmevorrichtung als Bestandteil einer Spleißkassette ausgebildet sein und in dieser verwendet werden. Dabei kann die erfindungsgemäße Spleißschutzaufnahmevorrichtung integral mit der Spleißkassette oder als ein separates in die Spleißkassette eingesetztes Bauteil ausgebildet sein. Zudem kann bspw. die erfindungsgemäße Spleißschutzaufnahmevorrichtung in einer Spleißkassette angeordnet sein, welche als solche in einem Spleißmodulstapel angeordnet ist.

Im Folgenden wird die Erfindung anhand von Ausführungsbeispielen näher erläutert.

Im Einzelnen zeigt:
- **Figur 1**: eine perspektivische Ansicht eines Teils einer erfindungsgemäßen Spleißschutzaufnahmevorrichtung;
- **Figur 2**: eine perspektivische Ansicht der Spleißschutzaufnahmevorrichtung mit zwei eingelegten Spleißschutzen;
- **Figur 3**: eine Schnittansicht der Spleißschutzaufnahmevorrichtung mit zwei eingelegten Spleißschutzen;
- **Figur 4**: eine Spleißkassette mit erfindungsgemäßer Spleißschutzaufnahmevorrichtung.

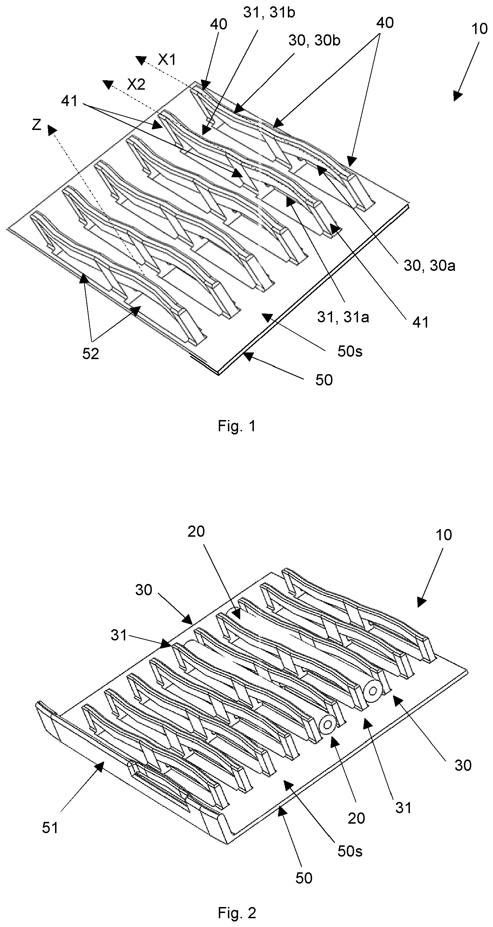

**Figur 1** zeigt eine perspektivische Ansicht einer erfindungsgemäßen Spleißschutzaufnahmevorrichtung 10, welche ein Tragelement 50, ein erstes Halteelement 30 sowie ein zweites Halteelement 31 umfasst. Genauer gesagt zeigt Figur 1 ein Ausführungsbeispiel der Spleißschutzaufnahmevorrichtung 10, bei welchem eine Vielzahl erster Halteelemente 30 und zweiter Halteelemente 31 auf dem Tragelement 50 angeordnet sind. Hierbei entsprechen sich die Halteelemente 30, 31, sodass die Rollenzuordnung als erste oder zweite Halteelemente bei diesem Beispiel beliebig ist.

Jedes der ersten Halteelemente 30 weist zwei Segmente 30a, 30b sowie drei erste Stege 40 auf. Die ersten Halteelemente 30 umfassen erste Stege 40, mittels welcher diese mit einer Tragelementoberflächen 50s des Tragelements 50 verbunden sind. Einer der ersten Stege 40 ist dabei zwischen einem ersten Segment 30a und einem zweiten Segment 30b des ersten Halteelementes 30 angeordnet. Die übrigen beiden ersten Stege 40 sind an den jeweils verbleibenden Enden der Segmente 30a, 30b angeordnet. In dem gezeigten Ausführungsbeispiel erstrecken sich die ersten Stege 40 im Wesentlichen parallel zu einer Tragelementhochachse Z, welche orthogonal zur Tragelementoberflächen 50s definiert ist. Entlang dieser Tragelementhochachse Z gesehen sind die Segmente 30a, 30b von der Tragelementoberfläche 50s beabstandet. Unterhalb der Segmente 30a, 30b (d. h. im Bereich zwischen zwei ersten Stegen 40) sind in das Tragelement 50 in der Tragelementoberfläche 50s Aussparungen 52 eingebracht.

Die zweiten Halteelemente 31 weisen, wie zuvor schon erläutert, dementsprechend ebenfalls zwei Segmente 31a, 31b sowie drei zweite Stege 41 auf. Es kann das zuvor beschriebene demnach sinngemäß auch auf die zweiten Halteelemente 31 übertragen werden.

Das erste Halteelement 30 und das zweite Haltelement 31 erstrecken sich jeweils entlang einer ihre größte räumliche Ausdehnung definierenden ersten Ausdehnungsrichtung X1 bzw. zweiten Ausdehnungsrichtung X2. Im gezeigten Ausführungsbeispiel ist die erste Ausdehnungsrichtung X1 parallel zu bzw. identisch mit der zweiten Ausdehnungsrichtung X2. Die drei ersten Halteelemente 30 sowie die drei zweiten Halteelemente 31 sind also paarweise nebeneinander und parallel zueinander auf dem Tragelement angeordnet. Zudem sind die Segmente 30a, 30b, 31a, 31b in einer parallel zu der Tragelementoberfläche 50s definierten Krümmungsebene gekrümmt. Genauer gesagt ist ein erstes der Segmente 30a des ersten Halteelements gegensinnig zu einem zweiten der Segmente 30b des ersten Halteelements gekrümmt. Ferner ist auch ein erstes der Segmente 31a des zweiten Halteelements 31 gegensinnig zu einem zweiten der Segmente 31b des zweiten Halteelements 31 gekrümmt. Aus Figur 1 ist zudem ersichtlich, dass das erste Segment 30a des ersten Halteelements 30, welches nächstbenachbart zu dem ersten Segment 31a des zweiten Halteelements 31 ist, gleichsinnig zu diesem gekrümmt ist. Es weisen also sowohl das erste Halteelement 30 als auch das zweite Haltelement 31 eine in der Krümmungsebene liegende S-Form auf, wobei sich beide S-Formen abgesehen von dem Querversatz entsprechen. Zum einfacheren Verständnis sind in Figur 1 lediglich drei erste und drei zweite Halteelemente 30, 31 des Ausführungsbeispiels dargestellt.

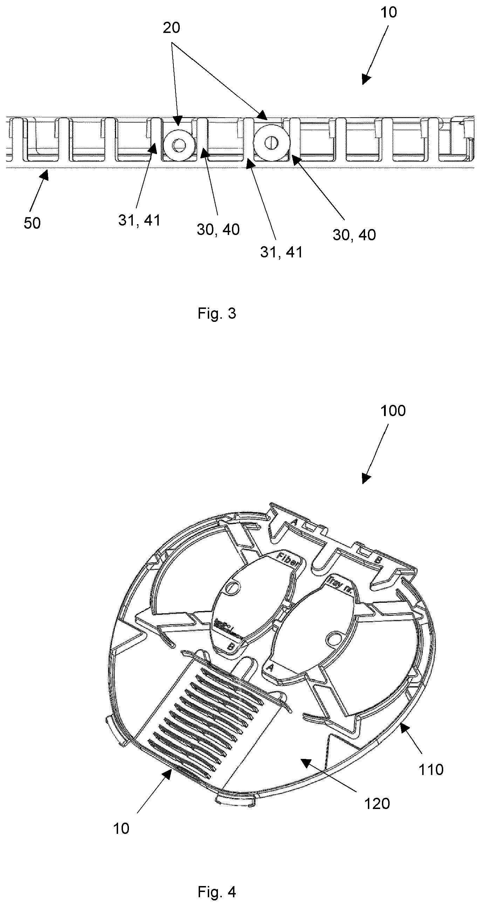

**Figur 2** zeigt eine perspektivische Ansicht der Spleißschutzaufnahmevorrichtung 10 mit zwei eingelegten Spleißschutzen 20 und je fünf ersten und fünf zweiten Halteelementen 30,31. Zusätzlich zu Figur 1 zeigt Figur 2 das ein Randelement 51 des Tragelements 50. Dieses Randelement 51 kann bspw. einen Außenumfang einer Spleißkassette (siehe Figur 4) ergänzen. Es können jedoch auch mehr als fünf Halteelementpaare auf der Tragelementoberfläche 50s angeordnet sein. Bspw. können, entlang der ersten Ausdehnungsrichtung X1 betrachtet, auch mehrere erste und/oder zweite Halteelemente 30, 31 aufeinanderfolgen. Auch quer zu der ersten Ausdehnungsrichtung X1 betrachtet können mehr als fünf Halteelementpaare angeordnet sein.

In Figur 2 ist jeder der Spleißschutze 20 durch jeweils ein Halteelementpaar gehalten. Genauer gesagt wird der Spleißschutz 20 von einem ersten Halteelement 30 und einem zweiten Halteelement 31 gehalten. In dem in Figur 2 gezeigten Ausführungsbeispiel können bspw. bis zu zehn Spleißschutze 20 gehalten werden.

**Figur 3** zeigt eine vergrößerte Schnittansicht der in Figur 2 dargestellten Spleißschutzaufnahmevorrichtung 10 mit eingelegten Spleißschutzen 20. Aus der Figur ist zu erkennen, dass die aufgenommenen Spleißschutze 20 unterschiedliche Außendurchmesser aufweisen können. Bspw. weist der weiter rechts gelegene Spleißschutz 20 einen größeren Außendurchmesser auf als der weiter links gelegene Spleißschutz 20. Der rechte Spleißschutz 20 wird von dem ersten Segment 30a des ersten Halteelements gegen zumindest einen der zweiten Stege 41 des zweiten Halteelements 31 und die Tragelementoberflächen 50 gedrückt und hierdurch fixiert. Aufgrund des größeren Durchmessers des rechten Spleißschutzes 20 ist das erste Segment 30a des ersten Halteelements 30 hierbei kraftschlüssig elastisch vorgespannt. Der linke der beiden Spleißschutze 20 weist demgegenüber einen kleineren Außendurchmesser auf und wird (nur oder im Wesentlichen) formschlüssig unter den jeweils auf ihn zugerichteten Auswölbungen der benachbarten Segmente 30,31 gehalten. Natürlich gilt die formschlüssige Fixierung ergänzend auch für den rechten Spleißschutz 20.

Aus Figur 3 wird bereits ersichtlich, dass abhängig von Form und Geometrie der Spleißschutze 20 sowie der Ausgestaltung der Halteelemente 30, 31 unterschiedliche Möglichkeiten zur Fixierung der Spleißschutze 20 in der Spleißschutzaufnahmevorrichtung 10 bestehen. Ist bspw. der Außendurchmesser des Spleißschutzes 20 größer als der Abstand zwischen der Tragelementoberfläche 50s und einer Unterkante zumindest eines der Segmente 30a, 30b (entlang der Tragelementhochachse Z gesehen), so wird der Spleißschutz 20 permanent von mindestens einem der Segmente 30a, 30b mit Kraft beaufschlagt. Demgegenüber kann, wenn der Außendurchmesser des Spleißschutzes 20 kleiner ist als der Abstand von der Tragelementoberfläche 50s zu der Unterkante von zumindest einem der Segmente 30a, 30b (entlang der Tragelementhochachse Z gesehen), der Spleißschutz 20 formschlüssig gegen Herausfallen gesichert sein, ohne permanent mit Kraft durch eines der Segmente 30a, 30b beaufschlagt zu sein. Zudem kann, wenn der Außendurchmesser des Spleißschutzes 20 kleiner ist als der Abstand zwischen dem ersten Steg 40 und dem zweiten Steg 41, dieser durch mindestens eines der Segmente 30a, 30b gegen zumindest einen (den Segmenten 30a, 30b) gegenüberliegenden zweiten Steg 41 gedrückt werden. Demgegenüber kann, wenn der Außendurchmesser des Spleißschutzes 20 ungefähr dem Abstand zwischen dem ersten Steg 40 und dem zweiten Stege 41 entspricht, dieser durch beide Stege 40, 41 gehalten werden. Hierbei werden, wie am Beispiel des rechten Spleißschutzes 20 zu erkennen, die Segmente 30, 31 derart elastisch verformt, dass der Spleißschutz 20 form- und kraftschlüssig zwischen diesen angeordnet ist.

**Figur 4** zeigt ein Ausführungsbeispiel einer Spleißkassette 100 mit einer darin aufgenommenen analogen Spleißschutzaufnahmevorrichtung 10. Die Spleißkassette 100 umfasst eine Überlängenablage 110 sowie einen Spleißbereich 120. Die mit Spleißschutzen 20 verbundenen Lichtwellenleiter werden nach dem Spleißvorgang in der Spleißaufnahmevorrichtung 10 der Spleißkassette 100 abgelegt und in dieser fixiert. Mehrere der Spleißkassetten 100 können zu einem Spleißkassettenstapel kombiniert werden und ein Spleißmodul bilden. Ferner können mehrere Spleißmodule zu einem Spleißmodulstapel kombiniert werden. Derartige Ausgestaltungen sind bspw. in den europäischen Patentanmeldungen EP 3 511 753 A1 und EP 3 916 449 A1 sowie in der deutschen Gebrauchsmusterschrift DE 20 2013 012 809 U1 beschrieben.

### Bezugszeichen

- 10: Spleißschutzaufnahmevorrichtung
- 20: Spleißschutz
- 30: erstes Halteelement
- 30a, 30b: Segmente (des ersten Halteelements)
- 31: zweites Halteelement
- 31a, 31b: Segmente (des zweiten Halteelements)
- 40: erste Stege
- 41: zweite Stege
- 50: Tragelement
- 50s: Tragelementoberfläche
- 51: Randelement
- 52: Aussparung
- 100: Spleißkassette
- 110: Überlängenablage
- 120: Spleißbereich
- X1: erste Ausdehnungsrichtung
- X2: zweite Ausdehnungsrichtung
- Z: Tragelementhochachse

## Patentansprüche

1. Vorrichtung (10) zur Aufnahme zumindest eines Spleißschutzes (20), wobei die Vorrichtung (10) umfasst:
ein Tragelement (50) aufweisend eine Tragelementoberfläche (50s), welche eine orthogonal zur Tragelementoberfläche (50s) gerichtete Tragelementhochachse (Z) definiert;
ein erstes Halteelement (30) aufweisend zwei Segmente (30a, 30b), welche in Richtung der Tragelementhochachse (Z) von der Tragelementoberfläche (50s) beabstandet und im Wesentlichen in einer Krümmungsebene, welche parallel zu der Tragelementoberfläche (50s) definiert ist, gekrümmt sind, und zumindest zwei erste Stege (40), mittels welcher dieses mit der Tragelementoberfläche (50s) verbunden ist, wobei die Stege (40), entlang einer ersten Ausdehnungsrichtung (X1) betrachtet, welche in einer Richtung einer größten räumlichen Ausdehnung des ersten Halteelements (30) definiert ist, an gegenüberliegenden Enden der zwei Segmente (30a, 30b) angeordnet sind; und
ein zweites Halteelement (31) aufweisend zwei Segmente (31a, 31b), welche in Richtung der Tragelementhochachse (Z) von der Tragelementoberfläche (50s) beabstandet sind, zumindest zwei zweite Stege (41), mittels welcher dieses mit der Tragelementoberfläche (50s) verbunden ist, und eine zweite Ausdehnungsrichtung (X2), welche in Richtung einer größten räumlichen Ausdehnung des zweiten Halteelements (31) definiert ist, und welche um weniger als 20° von der ersten Ausdehnungsrichtung (X1) abweicht,
**dadurch gekennzeichnet,**
**dass** ein erstes der Segmente (30a) des ersten Halteelements (30) gegensinnig zu einem zweiten der Segmente (30b) des ersten Halteelements (30) gekrümmt ist, und,
**dass** ein erstes der Segmente (31a) des zweiten Halteelements (31) gegensinnig zu einem zweiten der Segmente (31b) des zweiten Halteelements (31) gekrümmt ist.

2. Spleißschutzaufnahmevorrichtung (10) nach Anspruch 1, bei welcher die zumindest zwei zweiten Stege (41), entlang der zweiten Ausdehnungsrichtung (X2) betrachtet, an gegenüberliegenden Enden der zwei Segmente (31a, 31b) angeordnet sind.

3. Spleißschutzaufnahmevorrichtung (10) nach Anspruch 1 oder 2, bei welcher die zwei Segmente (31a, 31b) im Wesentlichen in der Krümmungsebene gekrümmt sind.

4. Spleißschutzaufnahmevorrichtung (10) nach einem der Ansprüche 1 bis 3, bei welcher das erste Segment (30a) des ersten Halteelements (30) nächstbenachbart zu dem ersten Segment (31a) des zweiten Halteelements (31) angeordnet und gleichsinnig zu diesem gekrümmt ist.

5. Spleißschutzaufnahmevorrichtung (10) nach einem der Ansprüche 1 bis 4, bei welcher das erste Segment (30a) des ersten Halteelements (30) nächstbenachbart zu dem ersten Segment (31a) des zweiten Halteelements (31) angeordnet und gegensinnig zu diesem gekrümmt ist.

6. Spleißschutzaufnahmevorrichtung (10) nach einem der vorstehenden Ansprüche, bei welcher das erste Halteelement (30) drei erste Stege (40) aufweist, wobei einer der ersten Stege (40) zwischen dem ersten Segment (30a) und dem zweiten Segment (30b) des ersten Halteelements (30) angeordnet ist, und wobei die übrigen beiden ersten Stege (40) an den jeweils verbleibenden Enden der Segmente (30a, 30b) angeordnet sind.

7. Spleißschutzaufnahmevorrichtung (10) nach einem der Ansprüche 1 bis 6, bei welcher das zweite Halteelement (31) drei zweite Stege (41) aufweist, wobei einer der zweiten Stege (41) zwischen dem ersten Segment (31a) und dem zweiten Segment (31b) des zweiten Halteelements (31) angeordnet ist, und wobei die übrigen beiden zweiten Stege (41) an gegenüberliegenden Enden des zweiten Halteelements (31) angeordnet sind.

8. Spleißschutzaufnahmevorrichtung (10) nach einem der Ansprüche 1 bis 7, bei welcher das Tragelement (50) in der Tragelementoberfläche (50s) Aussparungen (60) zwischen den Stegen (40, 41) der Halteelemente (30, 31) im Bereich der Segmente (30a, 30b, 31a, 31b) aufweist.

9. Spleißschutzaufnahmevorrichtung (10) nach einem der vorstehenden Ansprüche, welche einstückig aus einem ABS-Kunststoff, bevorzugt als Spritzgussteil, hergestellt ist.

10. Spleißkassette (100) zur Aufnahme zumindest eines Spleißschutzes (20), wobei die Spleißkassette (100) zumindest eine Überlängenablage (110) und einen Spleißbereich (120) mit einer Spleißschutzaufnahmevorrichtung (10) nach einem der Ansprüche 1 bis 9 aufweist.

11. Spleißmodul aufweisend eine Mehrzahl von Spleißkassetten (100) nach Anspruch 10 und zumindest eine Patchstelle.

12. Spleißmodulstapel mit einer Mehrzahl von Spleißmodulen nach Anspruch 11.

13. Verwendung einer Spleißschutzaufnahmevorrichtung (10) nach einem der Ansprüche 1 bis 9 in einer Spleißkassette (100) nach Anspruch 10, vorzugsweise außerdem in Form einer Verwendung der Spleißkassette (100) in einem Spleißmodul nach Anspruch 11.

## Claims

1. A device (10) for receiving at least one splice protector (20), the device (10) comprising:
a support element (50) having a support element surface (50s) which defines a support element vertical axis (Z) directed orthogonally to the support element surface (50s);
a first retaining element (30) having two segments (30a, 30b) which are spaced apart from the support element surface (50s) in the direction of the support element vertical axis (Z) and are curved substantially in a plane of curvature which is defined parallel to the support element surface (50s), and at least two first webs (40) by means of which the first retaining element (30) is connected to the support element surface (50s), the webs (40), as viewed along a first extension direction (X1) which is defined in a direction of a greatest spatial extent of the first retaining element (30), being arranged at opposite ends of the two segments (30a, 30b); and
a second retaining element (31) having two segments (31a, 31b) which are spaced apart from the support element surface (50s) in the direction of the support element vertical axis (Z), at least two second webs (41) by means of which the second retaining element (31) is connected to the support element surface (50s), and a second extension direction (X2) which is defined in the direction of a greatest spatial extent of the second retaining element (31) and which deviates from the first extension direction (X1) by less than 20°,
**characterized in that**
a first one of the segments (30a) of the first retaining element (30) is curved in the opposite direction to a second one of the segments (30b) of the first retaining element (30), and
a first one of the segments (31a) of the second retaining element (31) is curved in the opposite direction to a second one of the segments (31b) of the second retaining element (31).

2. The splice protector receiving device (10) according to claim 1, wherein the at least two second webs (41), as viewed along the second extension direction (X2), are arranged at opposite ends of the two segments (31a, 31b).

3. The splice protector receiving device (10) according to claim 1 or 2, wherein the two segments (31a, 31b) are curved substantially in the plane of curvature.

4. The splice protector receiving device (10) according to any one of claims 1 to 3, wherein the first segment (30a) of the first retaining element (30) is arranged closest adjacent to the first segment (31a) of the second retaining element (31) and is curved in the same direction thereto.

5. The splice protector receiving device (10) according to any one of claims 1 to 4, wherein the first segment (30a) of the first retaining element (30) is arranged closest adjacent to the first segment (31a) of the second retaining element (31) and is curved in the opposite direction thereto.

6. The splice protector receiving device (10) according to any one of the preceding claims, wherein the first retaining element (30) has three first webs (40), wherein one of the first webs (40) is arranged between the first segment (30a) and the second segment (30b) of the first retaining element (30), and wherein the remaining two first webs (40) are arranged at the respective remaining ends of the segments (30a, 30b).

7. The splice protector receiving device (10) according to any one of claims 1 to 6, wherein the second retaining element (31) has three second webs (41), wherein one of the second webs (41) is arranged between the first segment (31a) and the second segment (31b) of the second retaining element (31), and wherein the remaining two second webs (41) are arranged at opposite ends of the second retaining element (31).

8. The splice protector receiving device (10) according to any one of claims 1 to 7, wherein the support element (50) has recesses (60) in the support element surface (50s) between the webs (40, 41) of the retaining elements (30, 31) in the region of the segments (30a, 30b, 31a, 31b).

9. The splice protector receiving device (10) according to any one of the preceding claims, which is produced in one piece from an ABS plastic, preferably as an injection-molded part.

10. A splice cassette (100) for receiving at least one splice protector (20), the splice cassette (100) having at least one excess length deposit (110) and a splice region (120) with a splice protector receiving device (10) according to any one of claims 1 to 9.

11. A splice module having a plurality of splice cassettes (100) according to claim 10 and at least one patch site.

12. A splice module stack with a plurality of splice modules according to claim 11.

13. Use of a splice protector receiving device (10) according to any one of claims 1 to 9 in a splice cassette (100) according to claim 10, preferably also in the form of a use of the splice cassette (100) in a splice module according to claim 11.

## Revendications

1. Dispositif (10) destiné à recevoir au moins une protection contre l'épissure (20), le dispositif (10) comprenant :
un élément de support (50) présentant une surface d'élément de support (50s) qui définit un axe vertical d'élément de support (Z) orienté orthogonalement à la surface d'élément de support (50s) ;
un premier élément de retenue (30) présentant deux segments (30a, 30b) qui sont espacés de la surface d'élément de support (50s) dans la direction de l'axe vertical d'élément de support (Z) et qui sont courbés sensiblement dans un plan de courbure qui est défini parallèlement à la surface d'élément de support (50s), et au moins deux premières nervures (40) au moyen desquelles celui-ci est relié à la surface d'élément de support (50s), les nervures (40), vues le long d'une première direction d'extension (X1) qui est définie dans une direction d'une extension spatiale la plus grande du premier élément de retenue (30), étant disposées à des extrémités opposées des deux segments (30a, 30b) ; et
un deuxième élément de retenue (31) présentant deux segments (31a, 31b) qui sont espacés de la surface d'élément de support (50s) dans la direction de l'axe vertical d'élément de support (Z), au moins deux deuxièmes nervures (41) au moyen desquelles celui-ci est relié à la surface d'élément de support (50s), et une deuxième direction d'extension (X2) qui est définie dans la direction d'une extension spatiale la plus grande du deuxième élément de retenue (31) et qui s'écarte de moins de 20° de la première direction d'extension (X1),
**caractérisé en ce**
**qu'**un premier des segments (30a) du premier élément de retenue (30) est courbé en sens inverse d'un deuxième des segments (30b) du premier élément de retenue (30), et
**qu'**un premier des segments (31a) du deuxième élément de retenue (31) est courbé en sens inverse d'un deuxième des segments (31b) du deuxième élément de retenue (31).

2. Dispositif de réception de protection contre l'épissure (10) selon la revendication 1, dans lequel les au moins deux deuxièmes nervures (41), vues le long de la deuxième direction d'extension (X2), sont disposées à des extrémités opposées des deux segments (31a, 31b).

3. Dispositif de réception de protection contre l'épissure (10) selon la revendication 1 ou 2, dans lequel les deux segments (31a, 31b) sont courbés sensiblement dans le plan de courbure.

4. Dispositif de réception de protection contre l'épissure (10) selon l'une quelconque des revendications 1 à 3, dans lequel le premier segment (30a) du premier élément de retenue (30) est disposé à proximité immédiate du premier segment (31a) du deuxième élément de retenue (31) et est courbé dans le même sens que celui-ci.

5. Dispositif de réception de protection contre l'épissure (10) selon l'une quelconque des revendications 1 à 4, dans lequel le premier segment (30a) du premier élément de retenue (30) est disposé à proximité immédiate du premier segment (31a) du deuxième élément de retenue (31) et est courbé en sens inverse de celui-ci.

6. Dispositif de réception de protection contre l'épissure (10) selon l'une quelconque des revendications précédentes, dans lequel le premier élément de retenue (30) présente trois premières nervures (40), l'une des premières nervures (40) étant disposée entre le premier segment (30a) et le deuxième segment (30b) du premier élément de retenue (30), et les deux premières nervures restantes (40) étant disposées aux extrémités restantes respectives des segments (30a, 30b).

7. Dispositif de réception de protection contre l'épissure (10) selon l'une quelconque des revendications 1 à 6, dans lequel le deuxième élément de retenue (31) présente trois deuxièmes nervures (41), l'une des deuxièmes nervures (41) étant disposée entre le premier segment (31a) et le deuxième segment (31b) du deuxième élément de retenue (31), et les deux deuxièmes nervures restantes (41) étant disposées à des extrémités opposées du deuxième élément de retenue (31).

8. Dispositif de réception de protection contre l'épissure (10) selon l'une quelconque des revendications 1 à 7, dans lequel l'élément de support (50) présente dans la surface d'élément de support (50s) des évidements (60) entre les nervures (40, 41) des éléments de retenue (30, 31) dans la région des segments (30a, 30b, 31a, 31b).

9. Dispositif de réception de protection contre l'épissure (10) selon l'une quelconque des revendications précédentes, qui est fabriqué d'une seule pièce à partir d'une matière plastique ABS, de préférence sous forme de pièce moulée par injection.

10. Cassette d'épissure (100) destinée à recevoir au moins une protection contre l'épissure (20), la cassette d'épissure (100) présentant au moins un support de surlongueur (110) et une région d'épissure (120) avec un dispositif de réception de protection contre l'épissure (10) selon l'une quelconque des revendications 1 à 9.

11. Module d'épissure présentant une pluralité de cassettes d'épissure (100) selon la revendication 10 et au moins un point de raccordement.

12. Pile de modules d'épissure avec une pluralité de modules d'épissure selon la revendication 11.

13. Utilisation d'un dispositif de réception de protection contre l'épissure (10) selon l'une quelconque des revendications 1 à 9 dans une cassette d'épissure (100) selon la revendication 10, de préférence en outre sous forme d'une utilisation de la cassette d'épissure (100) dans un module d'épissure selon la revendication 11.
